# EUROPÄISCHE PATENTSCHRIFT

(11) **EP 1 740 424 B1**
(45) Veröffentlichungstag und Bekanntmachung des Hinweises auf die Patenterteilung: **13.08.2008**
(21) Anmeldenummer: 05716762.9
(22) Anmeldetag: 22.02.2005
(51) Int. Cl.: B60S 1/38, B60S 1/40

(54) **WISCHBLATT**
WIPER BLADE
RACLETTE D'ESSUIE-GLACE

(30) Priorität: 21.04.2004 DE 102004019157
(43) Veröffentlichungstag der Anmeldung: 10.01.2007
(73) Patentinhaber: ROBERT BOSCH GMBH, 70442 Stuttgart (DE)
(72) Erfinder: BAUER, Peter-Josef, 77815 Bühl (DE); WILMS, Christian, B-3582 Koersel-Beringen (BE); DE BLOCK, Peter, B-3545 Halen (BE); VERELST, Hubert, B-3300 Tienen (BE); VAN BAELEN, David, B-3020 Herent (BE); MAI, Stefan, B-3000 Leuven (BE); BEELEN, Hans, B-3540 Herk de Stad (BE)
(86) Internationale Anmeldenummer: PCT/EP2005/050753
(87) Internationale Veröffentlichungsnummer: WO 2005/102801

(56) Entgegenhaltungen:
- WO-A-02/40329
- DE-A1- 19 835 065

## Beschreibung

### Stand der Technik

Die Erfindung geht von einem gelenkfreien Wischblatt nach dem Oberbegriff des Anspruchs 1 aus.

Aus der DE 101 13 680 A1 ist ein gelenkfreies Wischblatt bekannt, dessen Wischleiste aus einem elastomeren Werkstoff besteht und an ihrer Oberseite einen Spoiler besitzt. Dieser kann unmittelbar angeformt und aus dem gleichen Werkstoff bestehen wie die Wischleiste oder ein separates Bauteil aus einem geeigneten anderen Kunststoff sein. Der Spoiler kann allein oder zusammen mit Federschienen, die in seitliche Längsnuten des Profils der Wischleiste eingelegt sind, als Tragelement des Wischblatts dienen. An den Enden des Wischblatts sind Kappen aufgesetzt, deren Leitflächen in Längsrichtung des Wischblatts verlaufen und sich mit einem geringen Absatz an die Leitfläche des Spoilers anschließen. Durch die Leitflächen des Spoilers und der Endkappen presst der Fahrtwind das Wischblatt mit zunehmender Geschwindigkeit des Fahrzeugs vermehrt gegen die Fahrzeugscheibe, wenn er das Wischblatt im Wesentlichen quer zur Längsrichtung anströmt.
Im mittleren Bereich des Wischblatts ist in einem Ausschnitt des Spoilers eine Anschlussvorrichtung nach dem so genannten "Sidelock-System" am Tragelement befestigt, bei dem der Wischarm im Bereich der Anschlussvorrichtung seitlich parallel zum Wischblatt verläuft. Es ist auch ein so genanntes "Overlock-System" bekannt, bei dem der Wischarm im Bereich der Anschlussvorrichtung oberhalb des Wischblatts verläuft. Die Anschlussvorrichtung besitzt an ihren Seitenteilen jeweils zwei Krallen, die die Federschienen des Tragelements seitlich umfassen und halten.

Aus der DE 198 35 065 A1 ist ein gelenkfreies Wischblatt bekannt, das eine Wischleiste mit einer Wischlippe und einer Kopfleiste aufweist. Die Kopfleiste ist über einen Kippsteg, der von zwei seitlichen Längsnuten begrenzt ist, in üblicher Weise mit der Wischlippe verbunden. Die Kopfleiste besitzt einen zentralen Längskanal, in dem ein Tragelement in Form einer flachen, rechteckigen Federschiene eingebettet ist. Bezogen auf die Längserstreckung ist im mittleren Bereich der Kopfleiste eine Anschlussvorrichtung in Form einer Blechkralle befestigt. Sie besitzt ein u-förmiges Profil mit einem an der Kopfleiste anliegenden Boden und sich daran nach außen anschließenden, in Längsrichtung des Wischblatts erstreckenden Seitenwänden, sodass das u-förmige Profil zu der von der Wischleiste abgewandten Seite hin offen ist. Die beiden Seitenwände sind in ihrem mittlerem Bereich durch einen Gelenkbolzen miteinander verbunden, der zum Anlenken des Wischblatts an einen Wischarm nach dem Top-Lock-System dient. In der Nähe der Stirnseiten der Blechkralle sind aus den Seitenwänden jeweils zwei Blechlappen ausgeklinkt, die um die Kopfleiste gebogen werden und die Federschiene an den Längsseiten teilweise umfassen. Die von den Lappen gebildeten Krallenfüße werden so weit senkrecht gegen die Breitseiten der Federschiene zusammengepresst, bis die Blechkralle gegen Verschieben sicher auf der Federschiene sitzt. Hierbei ist es vorteilhaft, wenn die Zwischenlage zwischen der Blechkralle und der Federschiene, die in den Ausführungsbeispielen durch die Kopfleiste der Wischleiste gebildet wird, einen größeren Reibungskoeffizienten aufweist, als die Blechkralle und die Federschiene. Dies gilt im Allgemeinen für Werkstoffe, aus denen Wischleisten gefertigt werden. Die dargestellten Ausführungen zeigen aus einem Metall einteilig gefertigte Federschienen als Tragelemente, jedoch können diese auch grundsätzlich aus mehreren Einzelteilen bestehen. Während der Montage der Blechkralle sind allerdings Schwierigkeiten bei der Lagefixierung der Federschienen zu erwarten, wenn zwei im Wesentlichen parallel verlaufende Federschienen vorgesehen sind.

Ferner ist aus der DE 43 20 637 A1 ein Wischblatt mit einem Tragbügelsystem bekannt. In einem zentralen Längskanal der Wischleiste ist eine Federschiene vorgesehen. Diese besitzt in ihren Endbereichen partielle Verbreiterungen, die den Längskanal nach außen warzenartig dehnen, sodass die Federschiene in Längsrichtung gesichert ist, insbesondere wenn zwischen zwei warzenartigen Erhebungen eine Haltekralle eines Bügels sitzt.

Aus der WO-A-02/40329 ist ein Wischblatt mit den Merkmalen des Oberbegriffs des Anspruchs 1 bekannt.

### Vorteile der Erfindung

Nach der Erfindung sind die Krallenfüße bei der Montage der Blechkralle um die Schmalseiten der Federschienen gebogen. Dabei sind zwischen den Krallenfüßen einerseits und den Federschienen anderseits mindestens eine Schicht und/oder eine Zwischenlage aus Kunststoff vorgesehen, die separat von der Wischleiste hergestellt und den Krallenfüßen angepasst sind sowie an ihrer Oberfläche zur Blechkralle und zu den Federschienen hin einen hohen Reibwert aufweisen. Durch die erfindungsgemäßen Maßnahmen lässt sich die Blechkralle auch bei Wischblättern mit zwei. Federschienen leicht und ohne zusätzliches Schweißen oder Kleben montieren. Dabei können die Federschienen von einer Vorrichtung erfasst und durch eine Distanzvorrichtung auf einen gewünschten Abstand gehalten werden. Da die Zwischenlage separat von der Wischleiste hergestellt und den Krallenfüßen zugeordnet und angepasst ist, kann sie leicht auf den Federschienen platziert werden, bevor die Wischleiste montiert ist. Somit kann zunächst die Blechkralle der Anschlussvorrichtung auf den Federschienen fixiert und anschließend die Wischleiste zwischen die Federschienen geschoben werden.

Der Kunststoff wird so gewählt, dass er einerseits an seiner Oberfläche das gewünschte Reibverhalten aufweist, und andererseits eine ausreichende Festigkeit hat, um den hohen Spannungen im Bereich der Krallenfüße standzuhalten. Dabei besteht die Möglichkeit, dass der Grundwerkstoff der Zwischenlage durch eine geeignete Oberflächenbehandlung oder Beschichtung die gewünschten Oberflächeneigenschaften erhält. Ferner ist es zweckmäßig, dass die Krallenfüße die Schicht oder die Zwischenlage gegen die Federschinen zusammenpressen. Dies kann dadurch geschehen, dass die Krallenfüße senkrecht zu den Breitseiten der Federschinen oder durch Umlappen eines Schenkels der Krallenfüße oder durch seitliches Zusammendrücken zusammengepresst werden.

Die Blechkralle kann auf jeder Seite des Wischblatts einen breiten Krallenfuß aufweisen oder zwei schmalere Krallenfüße, die in Längsrichtung des Wischblatts einen Abstand zueinander haben und in der Regel im Bereich der Stirnseiten der Blechkralle angeordnet sind. Die Länge der Zwischenlagen wird zweckmäßigerweise auf die Breite der Krallenfüße abgestimmt. Sind auf einer Längsseite des Wischblatts mehrere Krallenfüße vorgesehen, kann sich eine Zwischenlage auch über zwei oder mehrere Krallenfüße erstrecken.

In vorteilhafter Weise wird die Zwischenlage aus einem 1-förmigen, z-förmigen oder u-förmigen Strangpressprofil hergestellt, das auf die gewünschte Länge zugeschnitten wird. Im montierten Zustand liegt das 1-förmige bzw. z-förmige Profil mit einem abgewinkelten Schenkel an einer inneren Längskante des zugeordneten Krallenfußes an. Das u-förmige Strangpressprofil wird mit seiner offenen Seite zu den Federschienen hin zwischen die Schenkel der Krallenfüße geschoben. Bei einer weiteren Ausgestaltung der Erfindung wird die Zwischenlage durch eine Beschichtung der Krallenfüße zumindest an ihren Innenflächen gebildet. Dabei wird ein Kunststoff mit gleichen Eigenschaften wie für die Zwischenlage verwendet.

Die Blechkralle wird zweckmäßigerweise nach außen hin durch eine Kunststoffkappe abgedeckt, deren Außenkontur sich der Kontur der angrenzenden Spoiler anpasst, sodass sich diese ohne Stufen optisch und strömungstechnisch harmonisch an die Kunststoffkappe anschließen. Der Fügespalt zwischen dem Spoiler und der Kunststoffkappe wird durch jeweils einen Überstand am Spoiler und an der Kunststoffkappe überbrückt, wobei sich die Überstände gegenseitig überlappen. Von der Funktion her ist es gleichgültig, welcher der Überstände an der Außenseite des Profils liegt. In vorteilhafter Weise wird die Blechkralle in die Kunststoffkappe eingegossen und stützt sich mit innen liegenden Gegenflächen auf den oberen Breitseiten der Federschienen ab, indem die Gegenflächen zu den Federschienen hin relativ zu den oberen Schenkeln der Krallenfüße ein wenig vorstehen. Die Gegenflächen aus Kunststoff ersetzen auf dieser Seite eine entsprechende Zwischenlage.

Auf den Enden der Federschienen werden in der Regel Endkappen montiert und fixiert. Die Trennfuge zwischen der Endkappe und dem Spoiler wird ebenfalls durch jeweils einen Überstand an der Endkappe bzw. an dem Spoiler überbrückt. Dadurch ist es möglich, den Spoiler zwischen der Endkappe und der Kunststoffkappe bzw. der Blechkralle axial verschiebbar auf den Federschienen anzuordnen, sodass die Flexibilität des Wischblatts durch den Spoiler in den kritischen Bereichen nur gering beeinflusst wird.

Anstelle der Zwischenlagen oder zusätzlich zu den Zwischenlagen können die Federschienen relativ zur Blechkralle in Längsrichtung durch Ausstülpungen gesichert werden, die zwischen zwei benachbarten Krallenfüßen liegen und die Innenkontur der Krallenfüße nach oben, nach unten und/oder seitlich überlappen. Um die Krallenfüße gegeneinander zu stabilisieren, werden sie zweckmäßigerweise durch eine Brücke miteinander verbunden. Diese wird vorteilhafterweise auf der Innenseite der Ausstülpungen angeordnet.

Nach einer Ausgestaltung der Erfindung weist die Ausstülpung mindestens zwei Erhebungen auf. Dadurch ist es möglich, die Erhebungen nahe an die Krallenfüße zu rücken, ohne dass die einzelne Erhebung relativ groß sein muss.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht eines zusammengebauten Wischblatts von oben,
- Fig. 2: eine perspektivische Ansicht einer zum Teil montierten Anschlussvorrichtung nach Fig. 1,
- Fig. 3: eine Anschlussvorrichtung nach Fig. 1 im vergrößerten Maßstab,
- Fig. 4: eine perspektivische Ansicht einer Anschlussvorrichtung ohne Tragelement von unten,
- Fig. 5: eine perspektivische Ansicht einer Anschlussvorrichtung mit Tragelement von unten,
- Fig. 6: eine Variante zu einer Blechkralle nach Fig. 2,
- Fig. 7: eine Variante einer Blechkralle nach Fig. 2,
- Fig. 8: eine Teilansicht einer Blechkralle nach Fig. 7 in Längsrichtung, deren Krallenfüße die Zwischenlage senkrecht zu den Breitseiten der Federschienen zusammenpresst,
- Fig. 9: eine Teilansicht einer Blechkralle nach Fig. 7 in Längsrichtung, deren Krallenfüße die Zwischenlage durch Umlappen eines Krallenschenkels zusammenpresst,
- Fig. 10: eine Teilansicht einer Blechkralle nach Fig. 7 in Längsrichtung, deren Krallenfüße die Zwischenlage durch seitliches Zusammendrücken zusammenpresst,

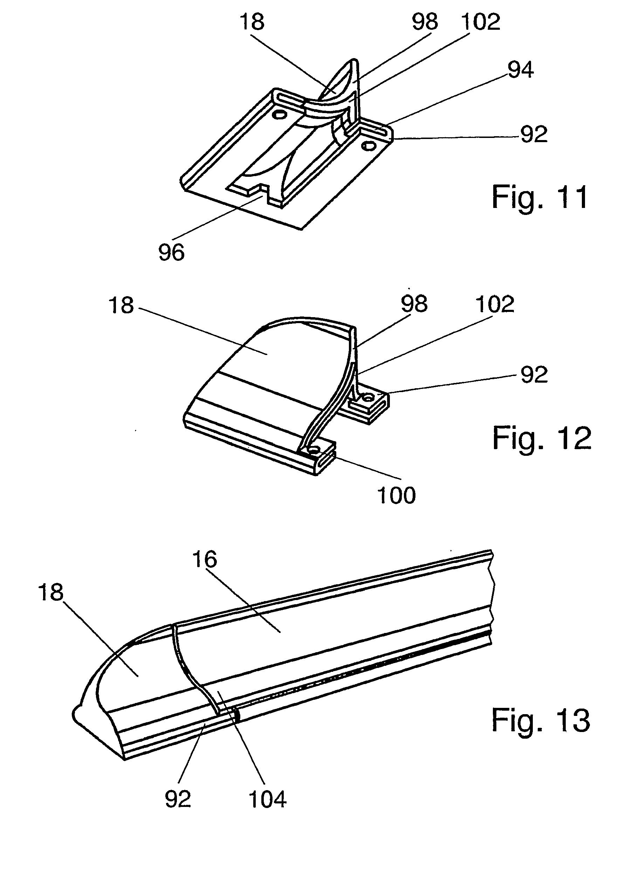

- Fig. 11: eine perspektivische Darstellung einer Endkappe von unten,
- Fig. 12: eine perspektivische Darstellung einer Endkappe nach Fig. 11 von oben,

- Fig. 13: eine perspektivische Darstellung eines Endes eines zusammengebauten Wischblatts,
- Fig. 14: eine perspektivische Teildarstellung einer Federschiene mit einer Ausstülpung und einer Blechkralle und
- Fig. 15 bis 17: Varianten zur Ausführung nach Fig. 14.

### Beschreibung der Ausführungsbeispiele

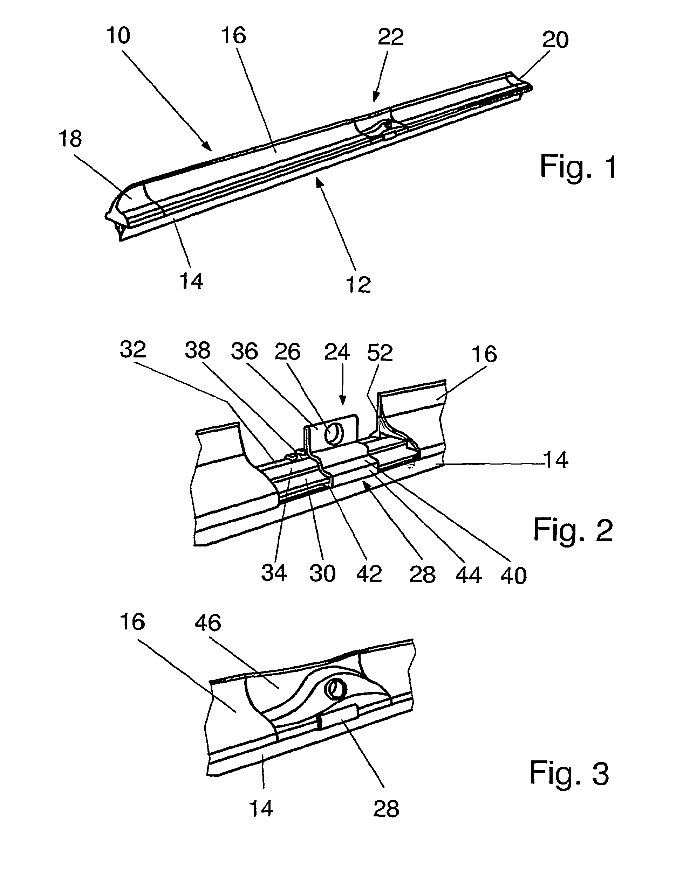

Ein gelenkfreies Wischblatt 10 besitzt im Wesentlichen eine Wischleiste 12 mit einer Wischlippe 14 und Spoilern 16, an die sich zu den Enden hin Endkappen 18 und 20 anschließen. Im mittleren Bereich des Wischblatts 10 ist eine Anschlussvorrichtung 22 vorgesehen, durch die das Wischblatt 10 gelenkig mit einem nicht dargestellten Wischarm verbunden werden kann. Die Anschlussvorrichtung 22 besitzt eine Blechkralle 24 (Fig. 2) und eine Kunststoffkappe 46 (Fig. 3), die auf die Blechkralle 24 oder auf Federschienen 30, 32 geklippst wird. Die Federschienen 30,32 bilden ein Tragelement für das Wischblatt 10. Sie sind so vorgebogen, dass das Wischblatt 10 im unbelasteten Zustand eine wesentlich stärkere Krümmung aufweist, als eine Fahrzeugscheibe, für die es vorgesehen ist. Wird das Wischblatt 10 durch den Wischarm gegen die Fahrzeugscheibe gedrückt, ergibt sich eine für den Wischvorgang geeignete Druckverteilung über die Länge des Wischblatts 10.

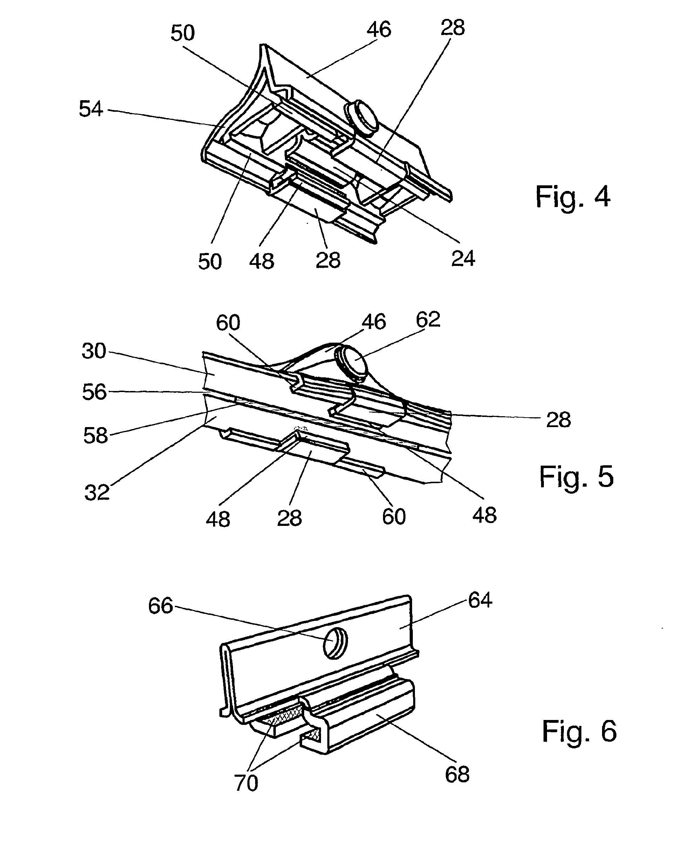

Die Blechkralle 24 ist aus einem Blechstreifen geformt, der in einem Mittelteil 36 um 180 Grad gefaltet ist, wobei die Falte in Längsrichtung des Wischblatts 10 verläuft und die Blechwände im Bereich der Falte aneinander liegen. Die freien Enden des Blechstreifens sind nach außen gebogen, überdecken die Oberseite der Federschienen 30 und 32 und bilden einen Freiraum 38 für eine Kopfleiste 34 der Wischleiste 12. Bei der Montage werden die seitlich über die Federschienen 30, 32 vorstehenden Teile des Blechstreifens zur Wischleiste 12 hin zweimal abgewinkelt, sodass Krallenfüße 28 jeweils mit einem oberen Schenkel 40, einem Seitenteil 44 und einem unteren Schenkel 42 gebildet werden. Der untere Schenkel 42 umfasst die Federschienen 30, 32 von unten (Fig. 5) und wird gegen den oberen Schenkel 40 gepresst, sodass die Federschienen (30, 32) zwischen den Schenkeln 40, 42 eingeklemmt werden.

Zwischen den Krallenfüßen 28 und den Federschienen 30, 32 ist eine Zwischenlage 48 aus einem Kunststoff angebracht (Fig. 4), dessen Reibungskoeffizient zu den Federschienen 30, 32 größer ist als der des Werkstoffs der Blechkralle 24. Der Kunststoff muss aber auch geeignet sein, die sehr hohen Spannungen und Flächenpressungen im Bereich der Krallenfüße 28 aufzunehmen. Die Krallenfüße 28 können in Längsrichtung ausreichend groß dimensioniert werden, wodurch sich die Kontaktflächen vergrößern und damit die Flächenpressungen verringern.

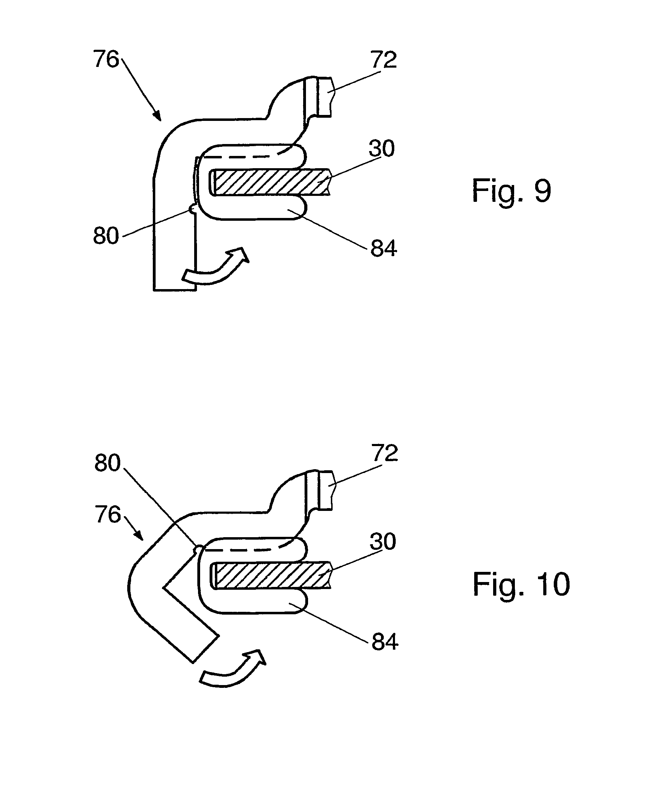

Während des Umfaltens der Krallenfüße 28 und des Pressvorgangs etwa senkrecht zu den breiteren Flächen der Federschienen 30, 32 werden diese durch eine Distanzvorrichtung 58 gegeneinander in einem vorgegebenen Abstand fixiert. Dabei wird die Zwischenlage 48 gegen die Federschienen 30, 32 etwas zusammengedrückt. Zwischen den Federschienen 30, 32 wird ein Zwischenraum 56 gebildet, in den später die Wischleiste 12 eingeschoben wird, wobei die Kopfleiste 34 auf der der Anschlussvorrichtung 22 zugewandten Seite der Federschienen 30, 32 liegt. Es besteht auch die Möglichkeit, die Krallenfüße 28, 76 durch Umlappen ihres unteren Schenkels 42 gegen die Federschienen 30, 32 zu drücken (Fig. 9) oder durch seitliches Zusammendrücken der Krallenfüße 76 (Fig. 10).

Bei der Ausführung nach Fig. 4 ist die Blechkralle 24 in der Kunststoffkappe 46 eingegossen, jedoch bleiben die Blechteile der Krallenfüße 28 frei, damit sie im Verlauf der späteren Montage umgebogen werden können. Die Kunststoffkappe 46 mit der Blechkralle 24 wird auf die Federschienen 30, 32 aufgesetzt (Fig. 5), wobei Führungsleisten 60 der Kunststoffkappe 46 die Federschienen 30, 32 von unten erfassen. Auf der Oberseite der Federschienen 30, 32 stützt sich die Kunststoffkappe 46 über Gegenflächen 50 an den Federschienen 30, 32 ab. Die Gegenflächen 50 stehen relativ zum oberen Schenkel 40 des Krallenfußes 28 etwas vor, sodass an dieser Seite kein metallischer Kontakt zwischen dem Krallenfuß 28 und der Federschiene 30, 32 vorhanden ist. Beim Umbiegen des unteren Schenkels 42 des Krallenfußes 28 wird zwischen dem unteren Schenkel 42 und der zugeordneten Federschiene eine Zwischenlage 48 aus Kunststoff eingefügt. Ihre Länge entspricht der Breite des Krallenfußes 28. Sie wird zweckmäßigerweise aus einem Strangpressprofil mit einem 1-förmigen oder z-förmigen Querschnittprofil geschnitten. Ein Schenkel des Strangpressprofils liegt an der inneren Kante des Krallenfußes 28 an (Fig. 4 und 5). Die Blechkralle 24 ist für den gelenkigen Anschluss an den Wischarm nach dem so genannten "Sidelock-Prinzip" vorgesehen. Sie besitzt daher eine Lagerbohrung 26, die koaxial zu einer Lageröffnung 62 der Kunststoffkappe 46 verläuft.

Die Blechkralle 64 mit einer Lagerbohrung 66 besitzt Krallenfüße 68, die zumindest an ihren Innenflächen mit einer Schicht 70 aus Kunststoff beschichtet sind. Der Kunststoff der Schicht 70 hat die gleichen Eigenschaften wie der Kunststoff der Zwischenlage 48. Er haftet fest an den Blechteilen, sodass sich die Schicht 70 beim Umfalten der Krallenfüße 68 nicht löst.

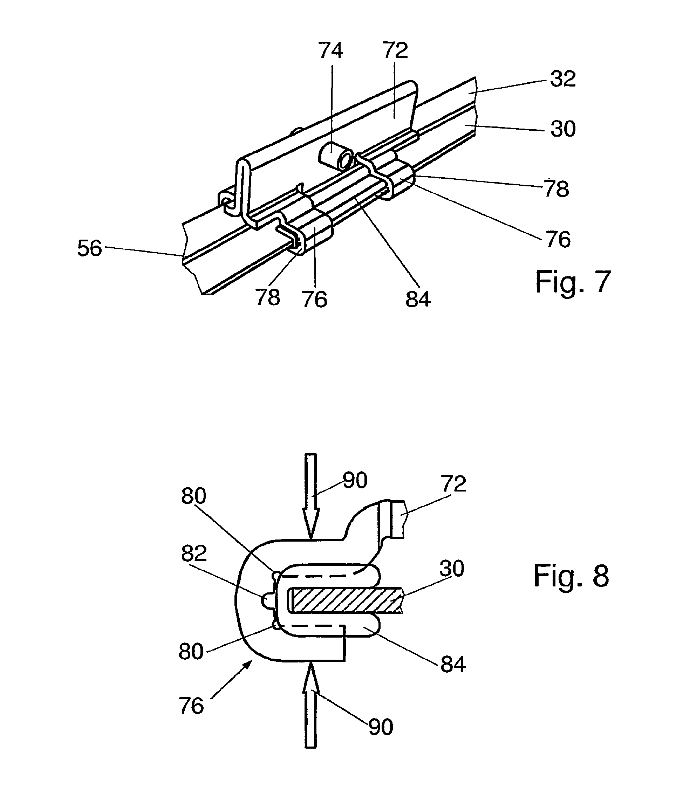

Die Blechkralle 72 nach der Ausführung entsprechend Fig. 7 ist für den Anschluss an den Wischarm nach dem so genannten "Overlock-Prinzip" ausgebildet. Sie besitzt daher einen Lagerstift 74 in ihrem Mittelteil. Ferner unterscheidet sie sich von der Blechkralle 24 dadurch, dass sie auf jeder Seite des Wischblatts 10 jeweils zwei Krallenfüße 76 besitzt. Diesen ist eine Zwischenlage 84 aus Kunststoff zugeordnet, die sich zwischen den äußeren Stirnseiten 78 der Krallenfüße 76 erstreckt. Sie besitzt ein u-förmiges Strangpressprofil. Die Krallenfüße 76 werden aus Blechteilen der Blechkralle 72 geformt, indem sie um die äußere Längsseite der Federschienen 30, 32 gebogen werden und anschließend in Anpressrichtung 90 gegeneinander gedrückt werden. Dabei gibt die Zwischenlage 84 bzw. die Schicht 70 ein wenig elastisch nach. Um den Biegevorgang zu erleichtern und um Anrisse in den Hohlkehlen zu vermeiden, sind in den Hohlkehlen des Krallenfußes 76 Sollbiegestellen 80 mit einem ausgerundeten Querschnitt vorgesehen. Zwischen diesen befindet sich etwa in der Mitte des Seitenteils eine weitere Sollbiegestelle 82, durch die eine kontrollierte Verformung des Krallenfußes 76 gewährleistet wird.

Nach der Montage der Wischleiste 12 werden auf die Enden der Federschienen 30, 32 die Endkappen 18, 20 montiert und befestigt, z.B. durch Kleben, Klippsen, Schweißen oder dgl. Dazu besitzen die Federschienen 30, 32 Führungsprofile 92, in dessen Führungsschlitz 94 die Federschienen 30, 32 eingesetzt sind. Ein keilförmiger Vorsprung 96 am geschlossenen Ende der Endkappen 18, 20 reicht in den Zwischenraum 56 und drückt die Federschienen 30, 32 auseinander. Die seitlichen Führungsprofile 92 können gegenüber einer Stirnwand 98 zu den Spoilern 16 hin vorstehen und in dem Vorsprung ein Loch 100 quer zum Führungsschlitz 94 besitzen. Das Loch 100 kann dazu dienen, die Endkappen 18, 20 mit den Federschienen 30, 32 zu verstiften. Die Endkappen 18, 20 haben zu den Spoilern 16 hin das gleiche Außenprofil wie die Spoiler 16, sodass sie sich wie die Kunststoffkappe 46 ohne Stufe an den Spoiler 16 anschlieβen.

Die Fügespalte zwischen dem Spoiler 16 und der Kunststoffkappe 46 werden durch Überstände 52 an den Spoilern und Überstände 54 an der Kunststoffkappe 46 überbrückt, die sich gegenseitig überlappen. Dabei ist es gleichgültig, welcher der Überstände 52, 54 nach außen hin angeordnet ist. Zwischen den Endkappen 18, 20 und den Spoilern 16 wird der Fügespalt ebenfalls durch Überstände 102 an den Endkappen 18, 20 und Überstände 104 an den Spoilern 16 in gleicher Weise überbrückt. Dabei können Überstände 104 an den Spoilern 16 die Vorsprünge der Führungsprofile 92 mit den Löchern 100 nach außen abdecken. Die Überstände 102, 104 ermöglichen eine axiale Verschiebung der Spoiler 16 zwischen den Endkappen 18, 20 einerseits und der Kunststoffkappe 46 andererseits.

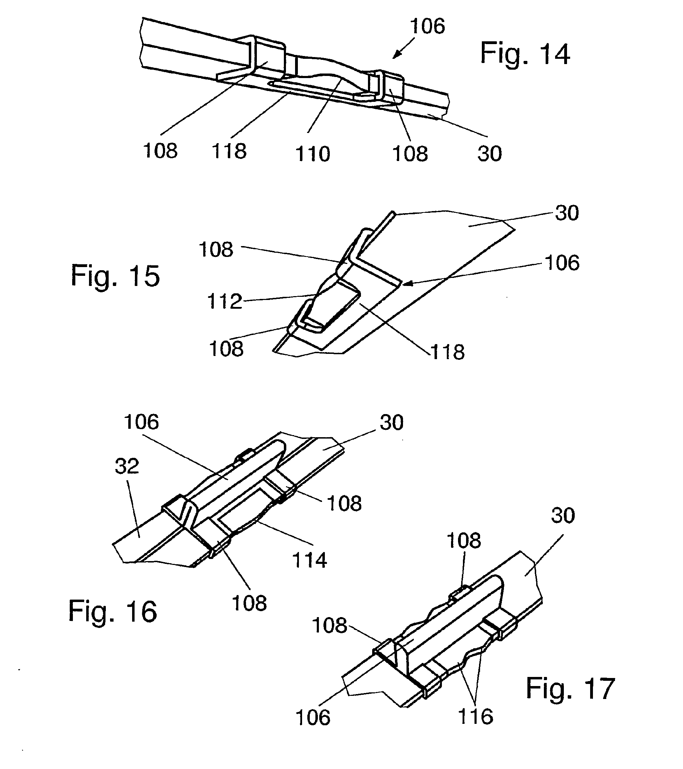

Die Federschienen 30 nach den Ausführungen nach Fig. 14 bis 15 weisen Ausstülpungen 110, 112, 114 und 116 auf, die im Bereich der äußeren Längsseiten der Federschienen 30, 32 zwischen zwei benachbarten Krallenfüßen 108 einer Blechkralle 106 liegen. Dabei zeigt die Ausführung nach Fig. 14 eine Ausstülpung 110 nach oben zum Mittelteil der Blechkralle 106 hin. Auf der Unterseite der Federschiene 30 sind die freien Schenkel der Krallenfüße 108 durch eine Brücke 118 miteinander verbunden.

Die Ausstülpung 112 nach Fig. 15 erstreckt sich zur Seite und nach oben, während sich die Ausstülpung 114 nach Fig. 16 nur zur Seite hin erstreckt. Die Ausstülpung 116 hat in Längsrichtung zwei Erhebungen, sodass die Seitenfläche der Federschiene 30 wellenförmig verläuft.

## Patentansprüche

1. Wischblatt (10), das aus einer Wischleiste (12) mit einer Wischlippe (14), aus zwei Federschienen (30, 32) und einer Anschlussvorrichtung (22) aufgebaut ist, wobei die Federschienen (30, 32) in seitliche, nach außen offene Längsnuten der Wischleiste (12) eingreifen und von Krallenfüßen (28, 68, 76, 108) einer Blechkralle (24, 64, 72, 106) der Anschlussvorrichtung (22) von einer äußeren Schmalseite aus umfasst werden, wobei die Krallenfüße (28, 68, 76, 108) bei der Montage der Blechkralle (24, 64, 72, 106) um die Schmalseiten der Federschienen (30, 32) gebogen sind, **dadurch gekennzeichnet, dass** zwischen den Krallenfüßen (28, 68, 76, 108) einerseits und den Federschienen (30, 32) andererseits mindestens eine Schicht (70) und/oder eine Zwischenlage (48, 84) aus Kunststoff vorgesehen sind, die separat von der Wischleiste (12) hergestellt und den Krallenfüßen (28, 68, 76 108) angepasst sind sowie an ihrer Oberfläche zur Blechkralle (24, 64, 72, 106) und zu den Federschienen (30, 32) hin einen hohen Reibwert aufweisen.

2. Wischblatt (10) nach Anspruch 1, **dadurch gekennzeichnet, dass** die Krallenfüße (28, 68, 76,108) die Schicht (70) oder die Zwischenlage (48, 84) gegen die Federschienen (30, 32) zusammenpressen.

3. Wischblatt (10) nach Anspruch 1 oder 2, **dadurch gekennzeichnet, dass** die Zwischenlage (48) ein im Querschnitt I-förmiges oder z-förmiges Profil aufweist und ein abgewinkelter Steg an einer inneren Längskante des zugeordneten Krallenfußes (28) anliegt.

4. Wischblatt (10) nach Anspruch 1 oder 2, **dadurch gekennzeichnet, dass** die Zwischenlage (84) ein im Querschnitt u-förmiges, zu den Federschienen (30, 32) hin offenes Strangpressprofil ist, das in seiner Länge der Breite eines Krallenfußes (28) oder dem Abstand der äußeren Stirnflächen (78) zweier benachbarter Krallenfüße (76) angepasst ist.

5. Wischblatt (10) nach Anspruch 1 oder 2, **dadurch gekennzeichnet, dass** die Krallenfüße (68) zumindest an ihren Innenflächen mit einer Schicht (70) aus Kunststoff beschichtet sind.

6. Wischblatt (10) nach einem der vorhergehenden Ansprüche, **dadurch gekennzeichnet, dass** die Blechkralle (24) in einer Kunststoffkappe (46) eingegossen ist, die sich mit Gegenflächen (50) auf den oberen Breitseiten der Federschienen (30, 32) abstützt, indem die Gegenflächen (50) zu den Federschienen (30, 32) hin relativ zu oberen Schenkeln (40) der Krallenfüße (28) vorstehen.

7. Wischblatt (10) nach einem der vorhergehenden Ansprüche mit je einem Spoiler (16) zu beiden Stirnseiten einer Kunststoffkappe (46), **dadurch gekennzeichnet, dass** die Kunststoffkappe (46) zu den Spoilern (16) hin eine gleiche äußere Querschnittkontur wie die Spoiler (16) hat und mit einem Überstand (54) einen Überstand (52) an den Spoilern (16) axial verschiebbar überlappt.

8. Wischblatt (10) nach Anspruch 7 mit je einem Spoiler (16) zu beiden Stirnseiten der Kunststoffkappe (46) und Endkappen (18, 20), **dadurch gekennzeichnet, dass** die Spoiler (16) auf den Federschienen (30, 32) zwischen der Anschlussvorrichtung (22) und den Endkappen (18, 20) axial verschiebbar angeordnet sind, wobei die Endkappen (18, 20) auf den Federschienen (30, 32) befestigt sind, zu den Spoilern (16) hin die gleiche äußere Querschnittkontur aufweisen wie die Spoiler (16) und mit Überständen (102) an ihren Stirnseiten (98) Überstände (104) an den Stirnseiten der Spoiler (16) mit Spiel überlappen.

9. Wischblatt (10) nach Anspruch 1, **dadurch gekennzeichnet, dass** die Blechkralle (106) mindestens an einer Außenseite einer Federschiene (30, 32) zwei Krallenfüße (108) aufweist, zwischen denen die Federschiene (30, 32) eine Ausstülpung (110, 112, 114, 116) aufweist, die die Krallenfüße (108) nach oben, nach unten und/oder seitlich überlappt.

10. Wischblatt (10) nach Anspruch 9, **dadurch gekennzeichnet, dass** die Krallenfüße (108), die gemeinsam einer Außenseite zugeordnet sind, durch eine Brücke (118) miteinander verbunden sind.

11. Wischblatt (10) nach Anspruch 9 oder 10, **dadurch gekennzeichnet, dass** die Ausstülpung (116) mindestens zwei Erhebungen aufweist.

12. Wischblatt (10) nach einem der vorhergehenden Ansprüche, **dadurch gekennzeichnet, dass** die Krallenfüße (28, 68, 76, 108) mindestens an einer ihrer inneren Hohlkehlen eine Sollbiegestelle (80) aufweisen.

13. Wischblatt (10) nach Anspruch 12, **dadurch gekennzeichnet, dass** die Krallenfüße (28, 68, 76, 108) zwischen ihren inneren Hohlkehlen eine weitere Sollbiegstelle (82) aufweisen.

14. Verfahren zum Herstellen eines Wischblatts (10) nach einem der Ansprüche 7 und 8, **dadurch gekennzeichnet, dass** zunächst die Blechkralle (24, 64, 106) auf die Federschienen (30, 32) montiert wird, wobei eine Distanzvorrichtung (58) während der Montage die Federschienen (30, 32) auf Abstand hält, dass danach die Wischleiste (12) zwischen die Federschienen (30, 32) geschoben wird und schließlich der Spoiler (16) und die Endkappen (18, 20) montiert werden.

## Claims

1. Wiper blade (10) which is constructed from a wiper strip (12) with a wiper lip (14), from two spring rails (30, 32) and a connection device (22), wherein the spring rails (30, 32) engage in lateral, outwardly open longitudinal grooves of the wiper strip (12) and are surrounded from an outer narrow side by claw feet (28, 68, 76, 108) of a sheet-metal claw (24, 64, 72, 106) of the connection device (22), and wherein the claw feet (28, 68, 76, 108) are bent around the narrow sides of the spring rails (30, 32) when the sheet-metal claw (24, 64, 72, 106) is fitted, **characterized in that** at least one layer (70) and/or intermediate layer (48, 84) of plastic is/are provided between the claw feet (28, 68, 76, 108) and the spring rails (30, 32), said layer/layers being produced separately from the wiper strip (12) and being matched to the claw feet (28, 68, 76, 108) and having a high frictional value on its/their surface towards the sheet-metal claw (24, 64, 72, 106) and towards the spring rails (30, 32).

2. Wiper blade (10) according to Claim 1, **characterized in that** the claw feet (28, 68, 76, 108) press the layer (70) or the intermediate layer (48, 84) against the spring rails (30, 32).

3. Wiper blade (10) according to Claim 1 or 2, **characterized in that** the intermediate layer (48) has an 1-shaped or z-shaped profile in cross section and an angled web bears against an inner longitudinal edge of the associated claw foot (28).

4. Wiper blade (10) according to Claim 1 or 2, **characterized in that** the intermediate layer (84) is an extruded profile which is u-shaped in cross section, is open towards the spring rails (30, 32) and is matched in its length to the width of a claw foot (28) or to the distance between the outer end surfaces (78) of two adjacent claw feet (76).

5. Wiper blade (10) according to Claim 1 or 2, **characterized in that** the claw feet (68) are coated at least on their inner surfaces with a layer (70) of plastic.

6. Wiper blade (10) according to one of the preceding claims, **characterized in that** the sheet-metal claw (24) is cast in a plastic cap (46) which is supported with mating surfaces (50) on the upper wide sides of the spring rails (30, 32) by the mating surfaces (50) protruding towards the spring rails (30, 32) relative to upper legs (40) of the claw feet (28).

7. Wiper blade (10) according to one of the preceding claims with a respective spoiler (16) on both end sides of a plastic cap (46), **characterized in that**, towards the spoilers (16), the plastic cap (46) has an identical outer cross-sectional contour as the spoilers (16) and, by means of an excess length (54), overlaps an excess length (52) on the spoilers (16) in an axially displaceable manner.

8. Wiper blade (10) according to Claim 7 with a respective spoiler (16) on both end sides of the plastic cap (46), and with end caps (18, 20), **characterized in that** the spoilers (16) are arranged in an axially displaceable manner between the connection device (22) and the end caps (18, 20) on the spring rails (30, 32), the end caps (18, 20) being fastened to the spring rails (30, 32), having, towards the spoilers (16), the same outer cross-sectional contour as the spoilers (16), and, by means of excess lengths (102) on their end sides (98), overlapping excess lengths (104) on the end sides of the spoilers (16) with play.

9. Wiper blade (10) according to Claim 1, **characterized in that** the sheet-metal claw (106) has, at least on an outer side of a spring rail (30, 32), two claw feet (108) between which the spring rail (30, 32) has a protuberance (110, 112, 114, 116) which overlaps the claw feet (108) upwards, downwards and/or laterally.

10. Wiper blade (10) according to Claim 9, **characterized in that** the claw feet (108) which are jointly assigned to an outer side are connected to each other by means of a bridge (118).

11. Wiper blade (10) according to Claim 9 or 10, **characterized in that** the protuberance (116) has at least two bumps.

12. Wiper blade (10) according to one of the preceding claims, **characterized in that** the claw feet (28, 68, 76, 108) have a predetermined bending point (80) at least on one of their inner hollow flutes.

13. Wiper blade (10) according to Claim 12, **characterized in that** the claw feet (28, 68, 76, 108) have a further predetermined bending point (82) between their inner hollow flutes.

14. Method for producing a wiper blade (10) according to either of Claims 7 and 8, **characterized in that** first of all the sheet-metal claw (24, 64, 106) is fitted onto the spring rails (30, 32), with a spacer device (58) keeping the spring rails (30, 32) at a distance during the fitting, **in that** then the wiper strip (12) is pushed between the spring rails (30, 32), and finally the spoiler (16) and the end caps (18, 20) are fitted.

## Revendications

1. Balai d'essuie-glace (10) composé d'une lame d'essuyage (12) munie d'une lèvre d'essuyage (14), de deux rails raidisseurs (30, 32) et d'un dispositif d'accouplement (22),
les rails raidisseurs (30, 32) pénétrant dans des rainures longitudinales latérales ouvertes vers l'extérieur de la lame d'essuyage (12) et ils sont entourés par les pattes de griffe (28, 68, 76, 108) d'une griffe en tôle (24, 64, 72, 106) du dispositif d'accouplement (22), par le petit côté extérieur,
les pattes de griffe (28, 68, 76, 108) étant repliées au montage de la griffe en tôle (24, 64, 72, 106) autour des petits côtés des rails de raidisseur (30, 32),
**caractérisé en ce qu'**
entre d'une part les pattes de griffe (28, 68, 76, 108) et d'autre part les rails raidisseurs (30, 32), il est prévu au moins une couche (70) et/ou une couche intermédiaire (48, 84) en matière plastique fabriquée séparément de la lame d'essuyage (12) et adaptée aux pattes de griffe (28, 68, 76, 108) et ayant un coefficient de friction élevé au niveau de la surface supérieure tournée vers la griffe en tôle (24, 64, 72, 106) et vers les rails raidisseurs (30, 32).

2. Balai d'essuie-glace (10) selon la revendication 1,
**caractérisé en ce que**
les pattes de griffe (28, 68, 76, 108) compriment la couche (70) ou la couche intermédiaire (48, 84) contre les rails raidisseurs (30, 32).

3. Balai d'essuie-glace (10) selon l'une quelconque des revendications 1 ou 2,
**caractérisé en ce que**
la couche intermédiaire (48) a en section un profil en 1 ou en Z et une entretoise repliée s'applique contre une arête longitudinale intérieure de la patte de griffe (28) associée.

4. Balai d'essuie-glace (10) selon l'une quelconque des revendications 1 ou 2,
**caractérisé en ce que**
la couche intermédiaire (84) est un profil extrudé, à section en forme de U ouvert vers les rails raidisseurs (30, 32), et dont la longueur est adaptée à la largeur d'une patte de griffe (28) ou à la distance des surfaces frontales extérieures (78) de deux pattes de griffe (76) voisines.

5. Balai d'essuie-glace (10) selon l'une quelconque des revendications 1 ou 2,
**caractérisé en ce que**
les pattes de griffe (68) ont au moins leurs surfaces intérieures revêtues d'une couche (70) de matière plastique.

6. Balai d'essuie-glace (10) selon l'une quelconque des revendications précédentes,
**caractérisé en ce que**
la griffe en tôle (24) est noyée dans un capuchon en matière plastique (46) qui s'appuie par des surfaces complémentaires (50) sur le côté large supérieur des rails raidisseurs (30, 32) **en ce que** les surfaces complémentaires (50) dépassent des rails raidisseurs (30, 32) par rapport aux branches supérieures (40) des pattes de griffe (28).

7. Balai d'essuie-glace (10) selon l'une quelconque des revendications précédentes, comportant un déflecteur (16) sur les deux faces frontales d'un capuchon en matière plastique (46),
**caractérisé en ce que**
le capuchon en matière plastique (46) chevauche en direction du déflecteur (16), un contour de section extérieure identique à celui du déflecteur (16) et avec une distance de dépassement (54) selon une distance de dépassement (52) des déflecteurs (16) en pouvant coulisser axialement.

8. Balai d'essuie-glace (10) selon la revendication 7, comportant un déflecteur (16) sur les deux faces frontales du capuchon en matière plastique (46) ainsi que des capuchons d'extrémité (18, 20),
**caractérisé en ce que**
les déflecteurs (16) sont installés sur les rails raidisseurs (30, 32) entre le dispositif d'accouplement (22) et les capuchons d'extrémité (18, 20) en pouvant coulisser axialement,
les capuchons d'extrémité (18, 20) étant fixés sur les rails raidisseurs (30, 32) en ayant vis-à-vis des déflecteurs (16) le même contour de section extérieure que celui des déflecteurs (16) et des dépassements (102) de leurs faces frontales (98) chevauchent les dépassements (104) des faces frontales des déflecteurs (16) en laissant du jeu.

9. Balai d'essuie-glace (10) selon la revendication 1,
**caractérisé en ce que**
la griffe en tôle (106) comporte au moins sur un côté extérieur d'un rail raidisseur (30, 32), deux pattes de griffe (108) entre lesquelles le rail raidisseur (30, 32) présente un débordement (110, 112, 114, 116) que la pattes de griffe (108) chevauche vers le haut ou vers le bas et/ou latéralement.

10. Balai d'essuie-glace (10) selon la revendication 9,
**caractérisé en ce que**
les pattes de griffe (108) prévues en commun sur un côté extérieur sont reliées par un pontet (118).

11. Balai d'essuie-glace (10) selon l'une quelconque des revendications 9 ou 10,
**caractérisé en ce que**
la partie en débordement (116) comporte au moins deux bossages.

12. Balai d'essuie-glace (10) selon l'une quelconque des revendications précédentes,
**caractérisé en ce que**
les pattes de griffe (28, 68, 76, 108) ont un point de flexion de consigne (80) au niveau d'au moins l'une de leurs cavités intérieures.

13. Balai d'essuie-glace (10) selon la revendication 12,
**caractérisé en ce que**
les pattes de griffe (28, 68, 76, 108) présentent un autre point de flexion de consigne (82) entre leurs cavités.

14. Procédé de fabrication d'un balai d'essuie-glace (10) selon l'une quelconque des revendications 7 et 8,
**caractérisé en ce qu'**
on installe tout d'abord la griffe en tôle (24, 64, 16) sur les rails raidisseurs (30, 32), un dispositif d'écartement (58) tenant les rails raidisseurs (30, 32) à distance en cours de montage,
ensuite, on glisse la lame d'essuie-glace (12) entre les rails raidisseurs (30, 32) et finalement on installe le déflecteur (16) et les capuchons d'extrémité (18, 20).
